# EUROPEAN PATENT APPLICATION

(11) **EP 2 897 432 A1**
(43) Date of publication of application: **22.07.2015**
(21) Application number: 13837174.5
(22) Date of filing: 22.08.2013
(51) Int. Cl.: H04W 68/12, H04W 4/22, H04W 16/32

(54) **MOBILE COMMUNICATION SYSTEM, WIRELESS BASE STATION, AND MOBILE STATION**

(30) Priority: 14.09.2012 JP 2012203071
(71) Applicant: NTT DOCOMO, INC., Chiyoda-ku Tokyo 100-6150 (JP)
(72) Inventor: AOYAGI, Kenichiro, Tokyo 100-6150 (JP); ISHII, Minami, Tokyo 100-6150 (JP); HAPSARI, Wuri Andarmawanti, Tokyo 100-6150 (JP)
(74) Representative: Hoffmann Eitle
(86) International application number: PCT/JP2013/072377
(87) International publication number: WO 2014/041982

(57) **Abstract**

The present invention enables broadcasting of broadcast information to a mobile station UE camping on a phantom cell. A mobile communication system according to the present invention transmits reference instruction information to a mobile station UE camping on or communicating in any of phantom cells #1 to #13, the reference instruction information instructing the mobile station UE to refer to broadcast information in a macro cell #A which the mobile station UE does not camp on or is not communicating in.

## Description

### TECHNICAL FIELD

The present invention relates to a mobile communication system, a radio base station, and a mobile station.

### BACKGROUND ART

In LTE (Long Term Evolution), discussions have been made on a configuration in which a large number of small cells called phantom cells are deployed to improve a communication capacity.

### PRIOR ART DOCUMENT

### NON-PATENT DOCUMENT

Non-patent document 1: 3GPP TS36.300

### SUMMARY OF THE INVENTION

From a view point of effective utilization of radio resources, a phantom cell may employ an operation mode in which broadcast information is not transmitted or an operation mode in which broadcast information including only minimum information is transmitted.

However, the broadcast information includes important information such as information on communication restrictions or information on emergency information broadcasting. For this reason, there is a problem that various inconveniences occur if a mobile station UE camping on a phantom cell cannot receive the broadcast information.

Hence, the present invention has been made with a view to the above-described problem, and an objective of the invention is to provide a mobile communication system, a radio base station, and a mobile station, with which necessary broadcast information can be distributed through a macro cell to a mobile station UE camping on a phantom cell.

A first feature of the present invention is summarized as a mobile communication system, including: a first cell and a second cell having a coverage area that at least partially overlaps with a coverage area of the first cell. Here, the mobile communication system is configured to transmit reference instruction information to a mobile station camping on or communicating in the first cell, the reference instruction information instructing the mobile station to refer to broadcast information in the second cell which the mobile station does not camp on or is not communicating in.

A second feature of the present invention is summarized as a radio base station to be used in a mobile communication system including a first cell and a second cell having a coverage area that at least partially overlaps with a coverage area of the first cell, the radio base station including: a transmission unit configured to transmit reference instruction information to a mobile station camping on or communicating in the first cell, the reference instruction information instructing the mobile station to refer to broadcast information in the second cell which the mobile station does not camp on or is not communicating in.

A third feature of the present invention is summarized as a mobile station to be used in a mobile communication system including a first cell and a second cell having a coverage area that at least partially overlaps with a coverage area of the first cell, the mobile station including: a reception unit configured to receive reference instruction information when the mobile station camps on or is communicating in the first cell. Here, the reception unit refers to broadcast information in the second cell, which the mobile station does not camp on or is not communicating in, based on the reference instruction information.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a radio base station PhNB#1 according to the first embodiment of the invention.
[Fig. 3] Fig. 3 is a functional block diagram of a mobile station UE according to the first embodiment of the invention.
[Fig. 4] Fig. 4 is a sequence diagram illustrating an operation of the mobile communication system according to the invention.

### MODE FOR CARRYING OUT THE INVENTION

### (Mobile communication system according to the first embodiment of the invention)

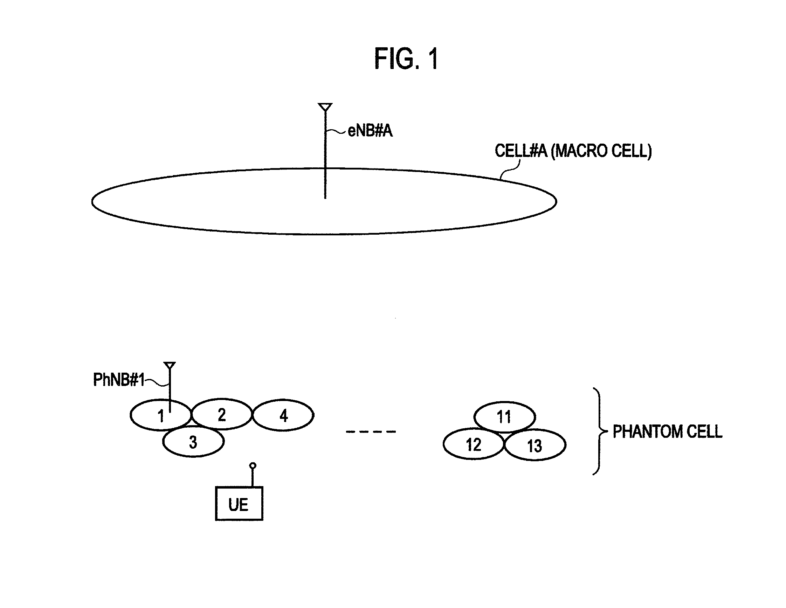

Described by referring to Figs. 1 to 4 is a mobile communication system according to a first embodiment of the present invention.

As illustrated in Fig. 1, a mobile communication system according to the present embodiment is the LTE mobile communication system, which includes a macro cell #A managed by a radio base station PhNB#A and phantom cells #1 to #13 managed by a radio base station PhNB##1.

As illustrated in Fig. 1, a coverage area of the macro cell #A and coverage areas of the phantom cells #1 to #13 are deployed to at least partially overlap with each other.

Here, the phantom cells 1 to #13 may be managed by one radio base station PhNB#1, may be managed by multiple radio base stations PhNB, or may be managed by a radio base station eNB. Also, the phantom cells may be cells other than macro cells and may be called other names.

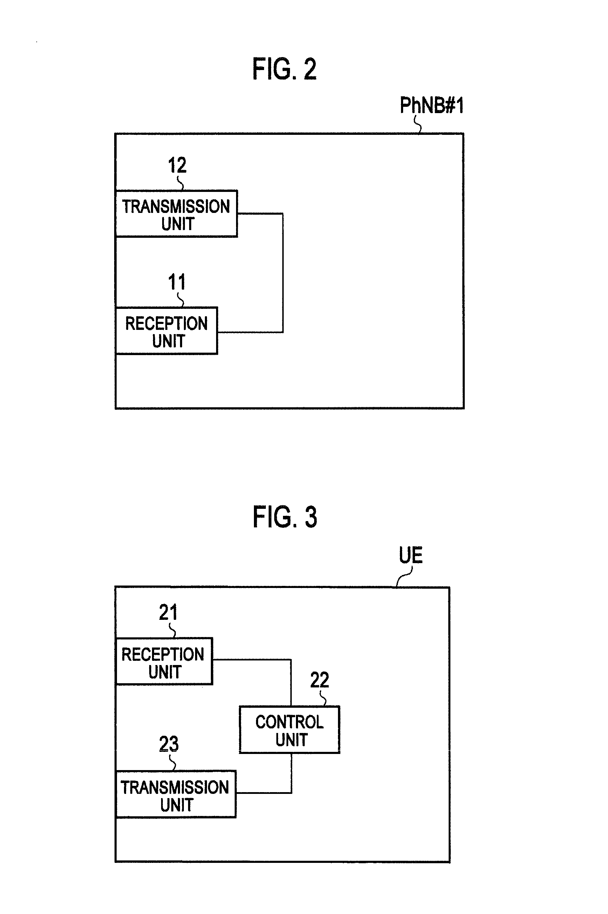

As illustrated in Fig. 2, the radio base station PhNB#1 according to the embodiment includes a reception unit 11 and a transmission unit 12.

The reception unit 11 is configured to receive various kinds of signals from the radio base station eNB#A, a mobile station UE, or the like. The transmission unit 12 is configured to receive various kinds of signals from the radio base station eNB#1, a mobile station UE, or the like.

For example, the reception unit 11 receives instruction information from the radio base station eNB#A, which indicates that broadcast information in the macro cell #A is changed.

In addition, the transmission unit 12 transmits reference instruction information instructing to refer to the broadcast information in the macro cell #A, to a mobile station UE camping on or communicating (in DRX state) in any of the phantom cells #1 to #13.

For example, the transmission unit 12 may transmit the above reference instruction information to the mobile station UE camping on or communicating (in DRX state) in the phantom cells #1 to #13 by using a paging signal.

Also, the transmission unit 12 may transmit the above reference instruction information through the phantom cells #1 to #13.

Moreover, the transmission unit 12 may transmit the above reference instruction information by using the broadcast information in the phantom cells #1 to #13. The above-mentioned broadcast information may only include information which is required at minimum, unlike the broadcast information to be used in the regular LTE.

Furthermore, the transmission unit 12 may include an information element in the reference instruction information, which instructs the mobile station UE to return to the phantom cells #1 to #13 at the time point when the mobile station UE completes the reference to the broadcast information.

As illustrated in Fig. 3, the mobile station UE according to the embodiment includes a reception unit 21, a control unit 22, and a transmission unit 23.

The reception unit 21 is configured to receive various kinds of signals from the radio base station eNB#A or the radio base station PhNB#1.

For example, the reception unit 21 receives the above reference instruction information when the mobile station UE camps on or is communicating in any of the phantom cells #1 to #13.

Here, the reception unit 21 refers to the broadcast information in the macro cell #A, which the mobile station UE does not camp on or is not communicating in, based on the reference instruction information.

Also, the reception unit 21 may receive the reference instruction information through a paging signal.

Moreover, the reception unit 21 may receive the reference instruction information through the phantom cells #1 to #13.

The control unit 22 is configured to perform various kinds of controls in the mobile station UE. The transmission unit 23 is configured to transmit various kinds of signals to the radio base station eNB#A or the radio base station PhNB#1.

Here, the control unit 22 determines to return to the phantom cells #1 to #13 at the time point when the above reference to the broadcast information is completed if the reference instruction information received by the reception unit 21 includes a predetermined information element.

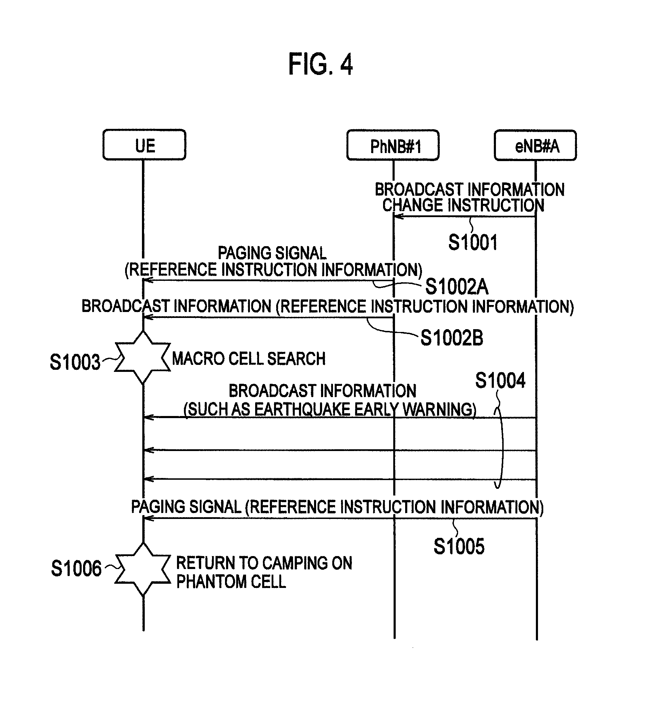

Described hereinafter by referring to Fig. 4 is an operation of the mobile communication system according to the embodiment.

As illustrated in Fig. 4, at step S1001, the radio base station eNB#A transmits the instruction information indicating that the broadcast information in the macro cell #A is changed to the radio base station PhNB#1.

At step S1002A, by using a paging signal, the radio base station eNB#A transmits reference instruction information instructing to refer to the broadcast information in the macro cell #A to the mobile station UE camping on or communicating (in DRX state) in the phantom cell #1.

Instead, at step S1002B, by using the broadcast information in the phantom #1, the radio base station eNB#A may transmit the reference instruction information instructing to refer to the broadcast information in the macro cell #A to the mobile UE camping on or communicating (in DRX state) in the phantom cell #1.

According to the reference instruction information, at step S1003, the mobile station UE searches the macro cell #A, and at step S1004, acquires broadcast information including emergency information such as Earthquake Early Warning in the macro cell #A.

At step S1005, by using a paging signal, the radio base station eNB#A transmits instruction information instructing a return to the phantom cell #1 to the mobile station UE camping on the macro cell #A.

Here, the instruction information may be notified as an information element in the reference instruction information.

At step S1006, the mobile station UE returns to the phantom cell #1 according to the instruction information.

The mobile communication system according to the embodiment can cause the mobile station UE camping on or communicating (in DRX state) in the phantom cell to acquire the broadcast information in the macro cell. Accordingly, even when the mobile station UE camps on or is communicating in a conventional phantom cell which does not transmit broadcast information, the mobile station UE can acquire important information such as information on communication restrictions or information on emergency information broadcasting.

The features of the present embodiment may also be expressed as follows.

A first feature of the present embodiment is summarized as a mobile communication system, including: phantom cells #1 to #13 (first cell) and a macro cell #A (second cell) having a coverage area that at least partially overlaps with a coverage area of the phantom cells #1 to #13. Here, the mobile communication system is configured to transmit reference instruction information to a mobile station UE camping on or communicating (in DRX state) in the phantom cells #1 to #13, the reference instruction information instructing the mobile station UE to refer to broadcast information in the macro cell #A which the mobile station UE does not camp on or is not communicating in.

A second feature of the present embodiment is summarized as a radio base station PhNB#1 to be used in a mobile communication system including phantom cells #1 to #13 and a macro cell #A having a coverage area that at least partially overlaps with a coverage area of the phantom cells #1 to #13, the radio base station including: a transmission unit 12 configured to transmit reference instruction information to a mobile station UE camping on or communicating (in DRX state) in the phantom cells #1 to #13, the reference instruction information instructing the mobile station UE to refer to broadcast information in the macro cell #A which the mobile station UE does not camp on or is not communicating in.

In the second feature of the present embodiment, the transmission unit 13 may transmit the reference instruction information to the mobile station UE by using a paging signal.

With the above-described configuration, the mobile station UE which camps on or is communicating (in DRX state) in the phantom cell can be securely notified of a start of distributing important information such as information on communication restrictions or information on emergency information broadcasting.

In the second feature of the present embodiment, the transmission unit 13 may transmit the reference instruction information through the phantom cells #1 to #13.

With the above-described configuration, the mobile station UE can learn that the broadcasting of the important information such as information on communication restrictions or information on emergency information broadcasting is started while being camping on or communicating in the phantom cell.

In the second feature of the present embodiment, the transmission unit 12 may form the reference instruction information including an information element instructing the mobile station UE to return to the phantom cells #1 to #13 at a time point when the mobile station UE completes reference to the broadcast information.

With the above-described configuration, the mobile station UE achieves an objective of acquiring the broadcast information in the macro cell, and, thereafter, can automatically return to the phantom cells #1 to #13. Accordingly, the effect of introducing the phantom cell, which is proper broadcasting of radio resources or RACH signal resources, can be received at maximum.

A third feature of the present embodiment is summarized as a mobile station UE to be used in a mobile communication system including phantom cells #1 to #13 and a macro cell #A having a coverage area that at least partially overlaps with a coverage area of the phantom cells #1 to #13, the mobile station UE including: a reception unit 21 configured to receive reference instruction information when the mobile station UE camps on or is communicating in the phantom cells #1 to #13. Here, the reception unit 21 refers to broadcast information in the macro cell #A, which the mobile station UE does not camp on or is not communicating in, based on the reference instruction information.

In the third feature of the present embodiment, the reception unit 21 may receive the reference instruction information through a paging signal.

In the third feature of the present embodiment, the reception unit 21 may receive the reference instruction information through the phantom cells #1 to #13.

In the third feature of the present embodiment, the mobile station may include a control unit 22 configured to determine to return to the phantom cells #1 to #13 at a time point when a reference to the broadcast information is completed if a predetermined information element is included in the reference instruction information received by the reception unit 21.

Here, the foregoing operations of the mobile station UE and the radio base stations eNB#A/PhNB#1 may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base stations eNB#A/PhNB#1. Otherwise, the storage medium and the processor may be provided as discrete components inside the mobile station UE and the radio base stations eNB#A/PhNB#1.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2012-203071 (filed on September 14, 2012) is incorporated by reference in the present specification.

### INDUSTRIAL APPLICABILITY

As described above, the present invention can provide a mobile communication system, a radio base station, and a mobile station, which can distribute broadcast information to a mobile station UE camping on a phantom cell.

### EXPLANATION OF REFERENCE NUMERALS

- eNB#A/PhNB#1: radio base station
- UE: mobile station
- 11: management unit
- 12, 21: reception unit
- 13: determination unit
- 14, 22: transmission unit

## Claims

1. A mobile communication system, comprising:
a first cell and a second cell having a coverage area that at least partially overlaps with a coverage area of the first cell, wherein
the mobile communication system is configured to transmit reference instruction information to a mobile station camping on or communicating in the first cell, the reference instruction information instructing the mobile station to refer to broadcast information in the second cell which the mobile station does not camp on or is not communicating in.

2. A radio base station to be used in a mobile communication system including a first cell and a second cell having a coverage area that at least partially overlaps with a coverage area of the first cell, the radio base station comprising:
a transmission unit configured to transmit reference instruction information to a mobile station camping on or communicating in the first cell, the reference instruction information instructing the mobile station to refer to broadcast information in the second cell which the mobile station does not camp on or is not communicating in.

3. The radio base station according to claim 2, wherein the transmission unit transmits the reference instruction information to the mobile station by using a paging signal.

4. The radio base station according to claim 2 or 3, wherein the transmission unit transmits the reference instruction information through the first cell.

5. The radio base station according to any one of claims 2 to 4, wherein the transmission unit forms the reference instruction information including an information element instructing the mobile station to return to the first cell at a time point when the mobile station completes reference to the broadcast information.

6. A mobile station to be used in a mobile communication system including a first cell and a second cell having a coverage area that at least partially overlaps with a coverage area of the first cell, the mobile station comprising:
a reception unit configured to receive reference instruction information when the mobile station camps on or is communicating in the first cell, wherein
the reception unit refers to broadcast information in the second cell, which the mobile station does not camp on or is not communicating in, based on the reference instruction information.

7. The mobile station according to claim 6, wherein the reception unit receives the reference instruction information through a paging signal.

8. The mobile station according to claim 6 or 7, wherein the reception unit receives the reference instruction information through the first cell.

9. The mobile station according to any one of claims 6 to 8, comprising a control unit configured to determine to return to the first cell at a time point when a reference to the broadcast information is completed if a predetermined information element is included in the reference instruction information received by the reception unit.
